Europäisches Patentamt

European Patent Office

Office européen des brevets

(11) Veröffentlichungsnummer: **0 480 331 A2**

## EUROPÄISCHE PATENTANMELDUNG

(21) Anmeldenummer: **91116966.2**

(51) Int. Cl.⁵: **G06F 3/14**

(22) Anmeldetag: **04.10.91**

(30) Priorität: **09.10.90 DE 4032044**

(43) Veröffentlichungstag der Anmeldung:
**15.04.92 Patentblatt 92/16**

(84) Benannte Vertragsstaaten:
**AT CH DE FR GB LI NL**

(71) Anmelder: **Pfister GmbH**
**Stätzlinger Strasse 70**

**W-8900 Augsburg(DE)**

(72) Erfinder: **Pohl, Walter, Dr.-Ing.**
**Neufnachstrasse 40**
**W-8935 Fischach(DE)**

(74) Vertreter: **Kahler, Kurt, Dipl.-Ing. et al**
**Postfach 1249 Gerberstrasse 3**
**W-8948 Mindelheim(DE)**

(54) **Datenverarbeitungssystem mit Bildschirmeinheiten.**

(57) Datenverarbeitungssystem mit einer Verarbeitungseinheit (12) und einem Systembus (14), über den eine Bildschirmeinheit (z. B. 26) über einen Videoadapter (24) anschließbar ist, wobei zumindest eine von mehreren Videoadaptern an den Systembus (14) über eine Ansteuerschaltung (20) derart selektiv anschließbar ist, daß die jeweils im gleichen Video-Adressenbereich, jedoch in unterschiedlichen Perioden auf dem Systembus (14) auftretenden Adressen-, Daten- und Steuersignale über zugeordnete Videoadapter (24) an jeweils eine andere der Bildschirmeinheiten (26) für eine von der Verarbeitungseinheit (12) unabhängige laufende Darstellung übertragbar sind.

FIG.1

Die Erfindung betrifft ein Datenverarbeitungssystem mit mehreren Bildschirmeinheiten gemäß dem Oberbegriff des Patentanspruchs 1.

Das erfindungsgemäße System ist insbesondere bestimmt für Datenverarbeitungsgeräte wie Personalcomputer, bei denen gewöhnlich von einer Prozessoreinheit, etwa einem Mikroprozessor, über einen Systembus verschiedene Einheiten, unter anderem ein einziges Bildschirmgerät, also ein Monitor angesteuert wird, der mit dem Systembus über einen Videoadapter verbunden ist. Es sind dabei verschiedene Bussysteme wie ISA, MCA oder EISA und auch verschiedene Standard-Videoadapter wie VGA oder EGA gebräuchlich.

Üblicherweise ist der Systembus bezüglich der übertragbaren Adressen beschränkt, beispielsweise auf 1 MByte, wobei die ersten 640 kByte für Daten und weitere Adressenbereiche für das BIOS-System und andere Steuerungen reserviert ist, so daß die für einen Monitor zur Verfügung stehenden Adressen gerade für die Ansteuerung eines einzigen Monitors ausreichen.

In der Praxis ergeben sich immer mehr Fälle, wo eine Bildschirmdarstellung an mehr als einer Stelle, d. h. an mehr als auf einem Monitor benötigt wird, wobei die dargestellten Informationen durchaus unterschiedlich sein sollen. Dies bedeutete bis heute, daß bei der üblichen Verwendung gleicher Standard-Videoadapter an jeder Stelle ein zumindest mit einem Mikroprozessor und genügend Speicherplatz ausgestattetes Bildschirmgerät angeordnet werden mußte, das über ein Netzwerk mit dem zentralen Datenverarbeitungsgerät verbunden ist.

Der Erfindung liegt deshalb die Aufgabe zugrunde, ein Datenverarbeitungssystem mit mehreren Bildschirmeinheiten anzugeben, bei dem trotz beschränkter Adressenkapazität des Systembusses eines Datenverarbeitungsgerätes die Ansteuerung mehrerer Bildschirmgeräte von einem Datenverarbeitungsgerät aus über Standard-Videoadapter ermöglicht wird. Dies kann auch im Einplatzbetrieb erfolgen.

Diese Aufgabe wird erfindungsgemäß gelöst durch ein System mit den Merkmalen des Patentanspruchs 1.

Die erfindungsgemäße Ansteuerschaltung bindet in flexibler Weise mehrere Bildschirmgeräte über Standard-Videoadapter an den Systembus an.

Bevorzugte Weiterbildungen der Erfindung sind in den übrigen Ansprüchen gekennzeichnet.

Weitere Merkmale und Vorteile der Erfindung ergeben sich aus der nachstehenden Beschreibung von Ausführungsbeispielen der erfindungsgemäßen Ansteuerschaltung anhand der Zeichnung. Es zeigen:

Fig. 1    ein prinzipielles Blockschaltbild eines die erfindungsgemäße Ansteuerschaltung verwendenden Datenverarbeitungsgerätes;

Fig. 2    eine in dem Gerät nach Fig. 1 verwendete Ansteuerschaltung;

Fig. 3    eine diagrammatische Darstellung der Adressenaufteilung bei einem Systembus eines Geräts nach Fig. 1;

Fig. 4    Zeitdiagramme zur Erläuterung der Funktion der Ansteuerschaltung nach Fig. 2; und

Fig. 5    eine gegenüber der Fig. 1 abgewandelte Ausführungsform der Erfindung.

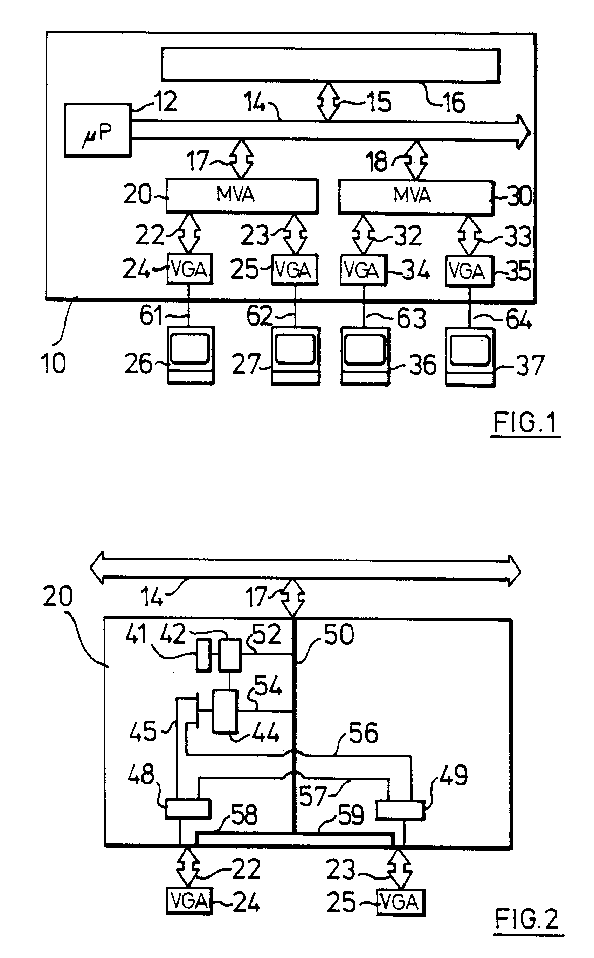

Fig. 1 zeigt schematisch das Blockschaltbild eines Datenverarbeitungssystems, bei dem die erfindungsgemäße Ansteueranordnung mit Vorteil Verwendung findet.

In einem Gehäuse 10 sind bevorzugt auf einer Hauptplatine ein Mikroprozessor 12 und ein Systembus 14 aufgebracht, durch den der Mikroprozessor 12 mit den verschiedensten Einheiten des Systems in Informationsverbindung treten kann. Als Beispiel ist eine periphere Einheit 16, etwa eine Festplatte gezeigt, die über entsprechende Leitungen 15 angesteuert wird.

Normalerweise ist bei einem derartigen System als eigenes Gerät ein einziger Monitor 26 vorgesehen, der vom Systembus 14 aus über einen Standard-Videoadapter 24, etwa einen VGA- oder EGA-Adapter angesprochen wird, der auf einer Erweiterungskarte im Gehäuse 10 angeordnet ist.

Der Systembus 14 hat beispielsweise einen Adressenumfang von 1 MByte, von denen im allgemeinen nur etwa 50 bis 100 kByte für den Videoadapter 24 zur Verfügung stehen, die gerade für dessen Adressierung und Aussteuerung ausreichen.

Die Erfindung schafft nun die Möglichkeit, durch Einfügen mindestens einer Ansteuerschaltung MVA 20 mehrere Monitore über ihnen zugeordnete Videoadapter anzusprechen, wobei jede MVA-Schaltung das Bindeglied dieser Videoadapter zum Systembus 14 herstellt.

Im Ausführungsbeispiel gemäß Fig. 1 sind zwei Ansteuerschaltungen MVA 20 und 30 gezeigt, die je zwei Videoadapter 24, 25 bzw. 36, 37 über die VGA 24, 25 bzw. VGA 34, 35 ansprechen. Die Anzahl der MVA 20 und die Anzahl der von ihnen bedienten Videoadapter 24, 25 ist nicht auf zwei beschränkt. So sind beispielsweise ohne weiteres acht Videoadapter von einer MVA 20 aus bedienbar, die wiederum den Informationsaustausch zum Systembus 14 über abgezweigte Busleitungen 17 bzw. 18 herstellen.

Fig. 2 zeigt als Ausführungsbeispiel der erfindungsgemäßen Ansteuerschaltung die MVA 20 in größerer Einzelheit. Insbesondere ist ersichtlich, daß sich der abgezweigte Bus 17 vom Systembus 14 in die MVA 20 als Busleitung 50 fortsetzt und in Teilbusleitungen 58 bzw. 59 verzweigt, über die der Bildschirmdarstellung entsprechende Adressen-, Daten- und Steuersignale an die beiden VGA 24 und 25 über entsprechende Leitungen 22, 23 anlegbar sind.

Ob nun keiner oder ein bestimmter der VGA 24 bzw. 25 (und der zugehörige Monitor 26 bzw. 27) angesprochen wird, entscheidet die in Fig. 2 dargestellte Schaltungsanordnung.

Jeder MVA 20 bzw. 30 ist eine I/O-Adresse des Systembus-Adreßbereichs zugeordnet, die auch in einer Speicherschaltung 41, etwa einem Register oder dergleichen (vornehmlich permanent) einstellbar ist. Eine Vergleichsschaltung 42 stellt über vom Systembus 50 abgezweigte Adressenleitungen 52 das Auftreten der in der Speicherschaltung 41 gespeicherten I/O-Adresse fest und aktiviert ein Auswahlregister 44, in das über Leitungen 54 eine Auswahlkennung eingegeben wird. Bei einer Anzahl n von Monitoren an der zugeordneten MVA 20 ist diese Auswahlkennung ein Binärwert 1-aus-n, im Falle des Ausführungsbeispiels also "01" oder "10".

Soll einer von vier Monitoren von einer MVA 20 angesteuert werden, dann hat das Auswahlregister 42 eine Kapazität von vier Bitstellen, um eine 1-aus-4-Kennung, beispielsweise "0100" aufzunehmen. Bei Betrieb mehrerer MVA erhalten alle außer einem, d. h. dem aktivierten die Kennung "0000".

Jede Bitstelle entspricht einem anderen Videoadapter und ist mit einer diesem zugeordneten Aktivierungsschaltung 48 bzw. 49 über eine Leitung 45 bzw. 56 verbunden, wobei diese Schaltung 48, 49 im einfachsten Falle eine Torschaltung sein kann, deren Ausgangssignal die zugeordnete VGA 24 bzw. 25 aktiviert bzw. deaktiviert, um ihr den auf den Leitungen 58 bzw. 59 anstehenden Informationsfluß (Adressen und Daten) zuzuleiten. Die eigentliche Zeitgabe hierfür erfolgt über Leitung 57, die vom Bus 50 zu beiden Schaltungen 48 bzw. 49 führt.

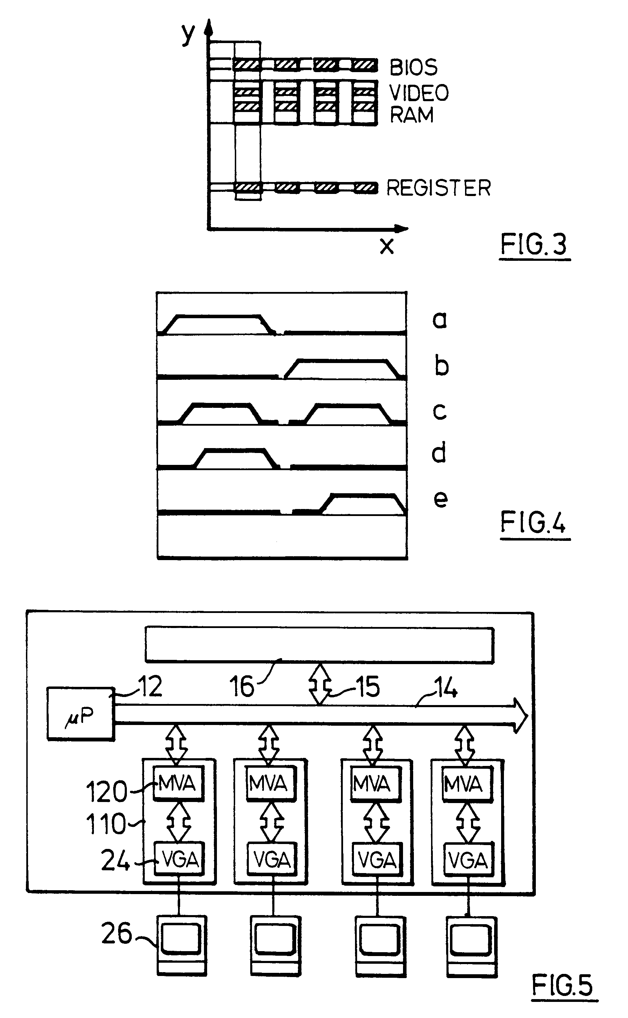

Anhand der Figuren 3 und 4 soll nachstehend die entsprechende Adressenzuordnung sowie der zeitliche Ablauf bei der Ansteuerung der VGA 24 bzw. 25 über die MVA 20 erläutert werden.

Wie eingangs erwähnt, besteht beim Betrieb mehrerer VGA bzw. Monitore das Problem, daß bei der Definition des Adreßraums nur ein Adreßbereich für einen Videoadapter vorgesehen wurde, d. h. daß nicht mehrere unterschiedliche Adreßfenster für mehrere VGA gleichzeitig im Adreßraum des Systembus untergebracht werden können.

Erfindungsgemäß werden nun die Adreßfenster für mehrere Videoadapter in einer zusätzlichen zweiten Dimension adressiert, wobei die Adressierung in der zweiten Dimension von der erfindungsgemäßen Ansteuerschaltung MVA 20 bzw. 30 vorgenommen wird.

Fig. 3 zeigt in Y-Richtung die übliche Aufteilung des Adreßraums (erste Säule) mit Adressen für Register, die über I/O-Signale ansprechbar sind. Oberhalb bzw. außerhalb des eigentlichen Datenadressenraums befindet sich das Adreßfenster für das Video-RAM des VGA und darüber ist schließlich ein Adressenbereich für das BIOS vorgesehen, d. h. die dem Datenverarbeitungsgerät eigene Firmware zur Durchführung der grundlegenden Operationen.

Wie zuvor erwähnt wird nun eine zweite Dimension in Richtung der X-Achse eingeführt, so daß für mehrere VGA 24, 25 bzw. Monitore 26, 27 jeweils die gleichen Y-Adressen gültig sind, die Zuordnung zu einem bestimmten VGA jedoch mittels der MVA und entsprechender I/O-Registerinhalte erfolgt, die der Programmierer direkt belegen kann.

In diesem Zusammenhang sei darauf hingewiesen, daß die vom Mikroprozessor 12 an einen gewählten Videoadapter, z. B. VGA 24 übertragene Bildinformation dort gespeichert und von diesem zur Bilderzeugung auf den zugeordneten Monitor unter Auffrischen (refreshing) laufend übertragen wird, so daß ein stehendes Bild angezeigt wird. Währenddessen hat der Mikroprozessor 12 genügend Zeit, über die gleichen Y-Adressen weitere VGAs und Monitore mit entsprechender Registerauswahl mit Bildinformation zu versorgen.

Unter Bezugnahme auf die Figuren 2 bis 4 soll nun zusammenfassend ein Auswahl- und Übertragungsvorgang für die Bildinformation an einen von mehreren Adaptern beschrieben werden.

Wie zuvor erwähnt ist jeder MVA 20, 30 eine I/O-Registeradresse zugeordnet. Sobald diese auf dem Bus 50 und damit auf den Leitungen 52 erscheint, stellt die Vergleichsschaltung 42 Koinzidenz mit der in der Speicherschaltung 41 gespeicherten Adresse fest und aktiviert das Register 44, in das dann über die Leitungen 54 der der I/O-Registeradresse entsprechende Registerinhalt in Form von "01" oder "10" eingeschrieben wird. Über Leitung 45 wird dann ein Signal gemäß Fig. 4a an die Aufsteuerschaltung 48 angelegt, während über Leitung 56 komplementär dazu gemäß Fig. 4b kein Signal auftritt. Alternativ dazu könnte dem Register auch ein 1-aus-n-Dekodierer nachgeordnet werden, der den gewünschten VGA aktiviert.

Sobald nun über den Bus 50 auf Leitung 57, die vom Bus 50 abgenommen ist, ein entsprechendes Zeitgabesignal (Fig. 4c) an die Schaltungen 48 und 49 angelegt wird, gibt die Aufsteuerschaltung 48 ein Signal gemäß Fig. 4d ab, wodurch über die Sammelleitungen 22 der VGA 24 zur Aufnahme der dem Adapter-Adreßfensterbereichentsprechenden Bildinformation aktiviert wird.

Bei einer umgekehrten Kennung tritt der gleiche Vorgang gemäß Fig. 4b, c und e für die Einheiten 49 und 25 auf. Es sei darauf hingewiesen, daß bei Vorhandensein mehrerer MVA 20, 30 die nicht gerade angesprochene MVA 30 in ihrem zugeordneten Register 44 die Kennung "00" empfängt, so daß beide Ansteuerschaltungen 48 und 49 und damit auch die zugeordneten VGA 34 und VGA 35 inaktiv bleiben.

Damit ist es auch möglich, keinen Videoadapter VGA 24 usw. anzusteuern. In diesem Falle sind die Register 44 aller MVA mit der Kennung "00" belegt.

Alternativ zu der Torwirkung der Aufsteuerschaltungen 48 und 49 können diese auch derart ausgebildet sein, daß zu einer Deaktivierung der VGAs die über den Bus 50 gelieferten Adressen durch Addition aus dem Adressenfenster des Zugeordneten Adapters hinausgeschoben werden.

Fig. 5 zeigt eine gegenüber den Figuren 1 und 2 modifizierte Ausführungsform, bei der jede MVA 120 genau einen VGA 24 auswählt und ansteuert. In diesem Falle kann die MVA 120 vorteilhaft auf die Leiterplatte 110 des Videoadapters VGA 24 gesetzt werden. Die Schaltung der MVA 120 vereinfacht sich dann, da lediglich ein EIN-/AUS-Zustand bei Aktivierung der gewünschten MVA 120 erzeugt werden muß.

**Patentansprüche**

1. Datenverarbeitungssystem mit einer Verarbeitungseinheit (12) und einem Systembus (14), über den Bildschirmeinheiten (z. B. 26) über einen zugeordneten Videoadapter (24) anschließbar sind, dadurch gekennzeichnet, daß zumindest einer von mehreren Videoadaptern (24,25,34,35) an den Systembus (14) über eine Ansteuerschaltung (20,30) derart selektiv anschließbar ist, daß die jeweils im gleichen Video-Adressenbereich jedoch in unterschiedlichen Perioden auf dem Systembus (14) auftretenden Adressen-, Daten- und Steuersignale über zugeordnete Videoadapter (24,25,34,35) an jeweils eine andere der Bildschirmeinheiten (26,27,36,37) für eine von der Verarbeitungseinheit unabhängige laufende Darstellung übertragbar sind.

2. Datenverarbeitungssystem nach Anspruch 1, dadurch gekennzeichnet, daß die Ansteuerschaltung (20,30) ein Register (44) zur Aufnahme einer Auswahlinformation aufweist, das für jede Periode die Auswahl mindestens eines Videoadapters (24,25,34,35) zur Aufnahme der auf dem Systembus (14) auftretenden Adressen-, Daten- und Steuersignale bestimmt, mehrere Bildschirmeinheiten (26,27,36,37) mit unterschiedlichem Bildinhalt praktisch gleichzeitig zu betreiben.

3. Datenverarbeitungssystem nach Anspruch 2, gekennzeichnet durch eine an die Ausgänge des Registers (44) angeschlossene Schaltlogik (48,49) zur selektiven Auswahl des (der) zu aktivierenden Videoadapter (24,25,34,35), dem (denen) die genannten Adressen-, Daten- und Steuersignale zugeführt wird (werden).

4. Datenverarbeitungssystem nach einem der vorhergehenden Ansprüche, dadurch gekennzeichnet, daß mehrere Ansteuerschaltungen (20,30) vorgesehen sind, von denen jede über eine individuelle Identifikationsnummer zu ihrer Aktivierung ansteuerbar ist.

5. Datenverarbeitungssystem nach Anspruch 4, dadurch gekennzeichnet, daß zumindest einer der Ansteuerschaltungen (20,30) mehrere Videoadapter (24,25,34,35) zugeordnet sind.

6. Datenverarbeitungssystem nach Anspruch 4, dadurch gekennzeichnet, daß jedem Videoadapter (24,25) je eine Ansteuerschaltung (120) zugeordnet ist.

7. Datenverarbeitungssystem nach Anspruch 6, dadurch gekennzeichnet, daß die einer Bildschirmeinheit (26,27) zugeordnete Ansteuerschaltung (120) mit dem zugeordneten Videoadapter (24) auf der gleichen Einsteckkarte (110) angeordnet sind.

8. Schaltungskarte zum Einsetzen in ein Datenverarbeitungssystem nach einem der vorhergehenden Ansprüche, dadurch gekennzeichnet, daß auf ihr mindestens eine Ansteuerschaltung (20,30;120) angebracht ist.

9. Schaltungskarte nach Anspruch 8, dadurch gekennzeichnet, daß auf ihr je eine Ansteuerschaltung (20,30) und ein Videoadapter (24,25,34,35) angeordnet ist oder daß sie als Hauptplatine (10) mit zusätzlich angeordneter Ansteuerschaltung (20,30) ausgebildet ist.

10. Verfahren zum Ansteuern von zumindest einer von an ein Datenverarbeitungssystem über einen Systembus (14) angeschlossenen Bildschirmeinheit (26), dadurch gekennzeichnet, daß der Videoadreßraum des Systems durch Registeradressierung derart erweitert wird, daß selektiv eine oder mehrere der angeschlossenen Bildschirmeinheiten (26,27,36,37) zur Aufnahme von Bildinformation aktiviert wird (werden).

FIG.1

FIG.2

FIG.3

FIG.4

FIG.5